# EUROPÄISCHE PATENTSCHRIFT

(11) **EP 3 743 292 B1**
(45) Veröffentlichungstag und Bekanntmachung des Hinweises auf die Patenterteilung: **03.05.2023**
(21) Anmeldenummer: 19701454.1
(22) Anmeldetag: 11.01.2019
(51) Int. Cl.: B60B 33/04, B60B 33/00, B60B 1/00

(54) **LAUFROLLE, SOWIE AUFSATZ-DÄMPFUNGSTEIL FÜR EINE LAUFROLLE**
ROLLER, AND ATTACHMENT DAMPING PART FOR A ROLLER
ROULETTE, ET ÉLÉMENT AMORTISSEUR RAPPORTÉ POUR UNE ROULETTE

(30) Priorität: 25.01.2018 DE 102018101653
(43) Veröffentlichungstag der Anmeldung: 02.12.2020
(73) Patentinhaber: Tente GmbH & Co. KG, 42929 Wermelskirchen (DE)
(72) Erfinder: BRISCHKE, Daniel, 42929 Wermelskirchen (DE); BLOCK, Wolfgang, 42929 Wermelskirchen (DE); PLAUTZ, Karl-Heinz, 58097 Hagen (DE)
(74) Vertreter: Müller, Enno
(86) Internationale Anmeldenummer: PCT/EP2019/050641
(87) Internationale Veröffentlichungsnummer: WO 2019/145164

(56) Entgegenhaltungen:
- EP-A1- 0 075 910
- DE-U1-202010 010 103
- JP-A- 2016 016 031
- US-A- 3 768 116
- US-A- 5 394 589

## Beschreibung

### Gebiet der Technik

Die Erfindung betrifft zunächst eine Laufrolle nach den Merkmalen des Oberbegriffes der Ansprüche 1, 9 und 10.

Weiter betrifft die Erfindung ein Aufsatz-Dämpfungsteil nach den Merkmalen des Oberbegriffes des Anspruches 13.

### Stand der Technik

Laufrollen der in Rede stehenden Art sind bereits in verschiedener Hinsicht bekannt geworden. So ist bspw. aus der EP 2 741 924 B1 eine Laufrolle in Art einer Doppelrolle bekannt, die um eine in üblicher Nutzungsstellung vertikal ausgerichtete Achse schwenl<bar ist. Das Rad bzw. die Räder der Laufrolle können bzgl. ihrer Drehung um die geometrische Radachse blockiert werden. Diese Blockierung, wie auch die Schwenkfestlegung der Laufrolle insgesamt, kann über mechanische Mittel erreicht werden. Aus der EP 2 720 882 B1 (US 8 776 314 B2) ist eine solche Laufrolle bekannt, bei welcher die Schwenkfeststellung und/oder die Radblockierung elektromechanisch durchgeführt werden kann.

Der in üblicher Nutzungsstellung nach oben über eine Gehäuselaufrolle überstehende Zapfen dient in der Regel als sogenannter Montagezapfen. In einer bspw. gestellseitigen Aufnahme ist der Zapfen der Laufrolle steckgehaltert.

Es besteht das Bedürfnis, bei derartigen Laufrollen, bspw. bei Anordnung derselben an Gestellen für medizinische Geräte oder dergleichen, eine Stoßabsorbierung zu erreichen. Durch Stöße können auf entsprechenden Verfahrwagen transportierte, insbesondere medizinische Geräte, darüber hinaus aber auch andere sensible Geräte, einen Schaden erleiden. Auch darüber hinaus ist eine solche Stoßabsorbierung bei Verfahrwagen anderer Nutzung von Vorteil.

Hierzu kann ein Dämpfungsteil, weiter bspw. ein Aufsatz-Dämpfungsteil für die Laufrolle zur Anwendung kommen.

Aus der EP 75910 A1 ist eine Laufrolle bekannt, bei welcher eine äußere Hülse vorgesehen ist, die als Steckabschnitt zur Steckanordnung in einer Steckaufnahme eines Gegenstandes dienen kann. Die Kräfte werden zwischen den Zapfen der Laufrolle und der Hülse jedoch nur im Sinne von Scherkräften übertragen. Dies führt zu einer hohen Beanspruchung des Dämpfungsmaterials und auch der Verbindung des Dämpfungsmaterials mit dem Zapfen sowie der Hülse.

Aus der US 3,768,116 A ist eine Laufrolle bekannt, bei der der über das Gehäuse überstehende Zapfen von einer Montagehülse überfangen ist und außenseitig zu der Montagehülse ein Dämpfungsmaterial aufweist. Die Rolle ist vermittels des Zapfens und des Dämpfungsmaterials unmittelbar in einer Steckaufnahme eines Lastwagenauslegers aufgenommen. Aus der DE 20 2010 010 103 U1 ist eine Lenkrolle für Koffer bekannt, bei welcher der Montagezapfen unmittelbar in einer Befestigungsaufnahme eines kofferseitigen Befestigungsteils angeordnet ist, unter Zwischenschaltung von Dämpfungsmaterial. Aus der JP 2016-16031 A ist eine Rolle bekannt, bei welcher der Montagezapfen vermittels Dämpfungsmaterial unmittelbar in einem Halterungsteil eines Rollstuhls angeordnet ist. Schließlich ist aus der US 5,394,589 A die gedämpfte Ausgestaltung eines Rades der Laufrolle bekannt. Im Hinblick auf eine wippenartige Anordnung der Rolle ist auch ein Dämpfungsmaterial zwischen dem Wippenausleger und einem Gehäuseteil der Rolle beschrieben.

### Zusammenfassung der Erfindung

Ausgehend von dem Stand der Technik gemäß der EP 75910 A1 beschäftigt sich die Erfindung mit der Aufgabenstellung, eine Laufrolle anzugeben, die bei vorteilhafter Dämpfung günstig aufgebaut ist.

Diese Aufgabe ist in einer Hinsicht beim Gegenstand des Anspruches 1 gelöst, wobei darauf abgestellt ist, dass die Hülse zu dem Zapfen auch axial nach oben durch das zwischen der Hülse und dem Zapfen angeordnete Dämpfungsmaterial beabstandet ist, wobei das Dämpfungsmaterial derart angeordnet ist, dass jegliche axiale und/oder radiale Berührung zwischen dem Zapfen und der Hülse gehindert ist, der Zapfen eine nach oben weisende Zapfen-Stirnfläche aufweist und das Dämpfungsmaterial in Überdeckung zu der Zapfen-Stirnfläche angeordnet ist, dass die Hülse eine nach unten weisende Hülsen-Stirnfläche aufweist, dass das Dämpfungsmaterial in Überdeckung zu der Hülsen-Stirnfläche angeordnet ist und dass das weiter in Überdeckung zu der Zapfen-Stirnfläche ausgebildete Dämpfungsmaterial eine in Richtung der zentralen Achse des Zapfens verlaufende Durchgangsöffnung belässt.
Diese Aufgabe ist weiter bei dem Gegenstand des Anspruches 9 gelöst, wobei darauf abgestellt ist, dass das Dämpfungsmaterial jedenfalls über eine axiale Teilhöhe einen dämpfungsmaterialfreien Bereich belässt, so dass zwei Dämpfungsmaterialabschnitte gegeben sind, ein in einer Nutzungsstellung der Rolle axial unterer Dämpfungsbereich, zugeordnet dem nach unten weisenden umlaufenden Rand der Hülse und ein axial oberer Dämpfungsbereich.
Diese Aufgabe ist darüber hinaus beim Gegenstand des Anspruches 10 gelöst, wobei darauf abgestellt ist, dass die Radachse mit einer Achs-hülse in einer Achshöhlung einer Nabe eines Rades aufgenommen ist, wobei zwischen der Achshülse und der Achshöhlung ein elastisches Material aufgenommen ist, und dass in einer Außenfläche der Achshülse über eine axiale Länge eine radiale Ausnehmung ausgebildet ist, in welcher das elastische Material aufgenommen ist.

Weiter beschäftigt sich die Erfindung mit der Aufgabenstellung, ein vorteilhaftes Aufsatz-Dämpfungsteil für eine Laufrolle anzugeben.
Diese Aufgabe ist beim Gegenstand des Anspruches 13 gelöst, wobei wesentlich ist, dass die innere Hülse radial, bezogen auf eine übliche Nutzungsstellung der mit dem Aufsatz-Dämpfungsteil versehenen Laufrolle, durch ein zwischen der inneren Hülse und der äußeren Hülse angeordnetes Dämpfungsmaterial beabstandet ist, dass die innere Hülse auch axial nach oben durch das Dämpfungsmaterial beabstandet ist, dass das Dämpfungsmaterial derart angeordnet ist, dass jegliche axiale und/oder radiale Berührung zwischen der inneren Hülse und der äußeren Hülse gehindert ist, dass an der inneren Hülse Festsetzungsmittel vorgesehen sind, die eine Fest-setzung des Aufsatz-Dämpfungsteils an der Laufrolle ermöglichen, dass die Festlegungsmittel als Schraube ausgebildet sind und dass die mit einem Innengewinde der inneren Hülse zusammenwirkende Schraube durch eine Öffnung in der äußeren Hülse betätigbar ist.
Bezüglich der Laufrolle ist eine sogenannte schwimmende Lagerung in der Steckverbindungsstellung der Laufrolle mit einem Verfahrwagen oder dergleichen erreichbar. Etwaige Stöße können so nicht mehr oder jedenfalls im Wesentlichen nicht mehr über die Laufrolle an den Verfahrwagen weitergeleitet werden. Vielmehr ist durch die strikte Beabstandung von Hülse und Zapfen durch das vorgesehene Dämpfungsmaterial in bevorzugt jeder Belastungsstellung der Laufrolle eine ausreichende Stoßdämpfung gegeben. Es lässt sich eine faktische Entkopplung im Hinblick auf übertragene Stöße zwischen der Laufrolle und dem Gestell beziehungsweise dem Verfahrwagen, an welchem die Rolle angebracht ist, erreichen.

Die Dämpfung wirkt mit Bezug auf eine bei üblicher Nutzungsstellung der Laufrolle vertikal ausgerichtete Achse, die zugleich eine Schwenkachse für die Laufrolle sein kann, in Axialrichtung, wie auch in Radialrichtung.

Das vorgesehene Dämpfungsmaterial bildet das Bindungselement zwischen dem laufrollenseitigen Zapfen und der nunmehr vorgesehenen Hülse. Die Hülse übernimmt hierbei die Funktion eines sogenannten Montagezapfens, kann entsprechend zur bspw. Steckanordnung der Laufrolle in einer entsprechenden Aufnahme eines Verfahrwagens oder dergleichen dienen. Durch die Überdeckung der Zapfen-Stirnfläche mit dem Dämpfungsmaterial ist auch eine axiale Beabstandung zwischen dem Zapfen und der Hülse erreicht.

Der in Überdeckung zu der Zapfen-Stirnfläche ausgebildete Abschnitt des Dämpfungsmaterials, welcher Abschnitt darüber hinaus in einer möglichen Ausgestaltung auch allein das Dämpfungsmaterial insgesamt bilden kann, ist jegliche Berührung zwischen Zapfen und Hülse insbesondere in Axialrichtung gehindert. Die Hülse kann sich so in einer möglichen Ausgestaltung allein über das Dämpfungsmaterial auf der Zapfen-Stirnfläche abstützen.

Hinsichtlich des Aufsatz-Dämpfungsteils ist so ein Nachrüstteil für eine übliche Laufrolle mit einem Zapfen angegeben. Das Aufsatz-Dämpfungsteil ist an dem Zapfen der Laufrolle anordbar, hierbei diesen bevorzugt mit einem inneren Hülsenteil übergreifend. Das äußere Hülsenteil kann hiernach die Funktion eines Montagezapfens bzw. einer Montageausbildung übernehmen, zur Festlegung der Laufrolle bspw. an einem Verfahrwagen. Auch hier ist durch die strikte Distanzierung von innerer und äußerer Hülse zueinander, dies bevorzugt sowohl in axialer als auch in radialer Richtung, eine sogenannte schwimmende Lagerung der Laufrolle in der Anordnungsstellung erreichbar. Das Dämpfungsteil dient hier als Bindeelement zwischen der inneren und der äußeren Hülse. Die innere Hülse kann hierbei, wie auch bevorzugt, unmittelbar an dem Zapfen der Laufrolle sowohl in Umfangsrichtung als auch in Axialrichtung anliegen.

Das Dämpfungsmaterial kann allein oder zusätzlich zu der vorbeschriebenen Anordnung zwischen zwei sich radial gegenüberliegenden Flächen ausgebildet sein. So kann sich zwischen dem Zapfen und der Hülse ein Ringraum ergeben, der es ermöglicht, das Dämpfungsmaterial zwischen der nach radial außen weisenden Außenfläche des Zapfens und der nach radial innen weisenden Innenfläche der Hülse anzuordnen. Durch eine solche Anordnung ist eine radiale Beabstandung von Zapfen und Hülse erreichbar.

Zudem kann die Hülse eine nach unten weisende Hülsen-Stirnfläche aufweisen. Das Dämpfungsmaterial kann hierbei in Überdeckung zu der Hülsen-Stirnfläche angeordnet sein. So kann weiter das Dämpfungsmaterial zwischen zwei axial gegenüberliegenden Flächen, nämlich bevorzugt der nach oben weisenden Zapfen-Stirnfläche und der nach unten weisenden Hülsen-Stirnfläche, ausgebildet sein.

In einer möglichen Ausgestaltung kann das in Überdeckung zu der Zapfen-Stirnfläche ausgebildete Dämpfungsmaterial eine in Richtung der zentralen Achse des Zapfens verlaufende Durchgangsöffnung belassen. Es kann so eine mit Bezug zu der zentralen Achse des Zapfens kreisringförmige Gestaltung des Dämpfungsmaterials vorgesehen sein. Auch kann mit Bezug auf einen Schnitt in einer bei üblicher Nutzungsstellung der Laufrolle betrachteten vertikalen Ebene das Dämpfungsmaterial von einem kreisringförmig ausgebildeten Abschnitt zwischen den Stirnflächen von Hülse und Zapfen einstückig und materialeinheitlich übergehen in einen mit Bezug auf die Zapfenachse kragenförmig umlaufenden Abschnitt zwischen der Außenfläche des Zapfens und der Innenfläche der Hülse. Es kann sich so eine topfartige Gestaltung des Dämpfungsmaterials ergeben.

Die Hülse kann zugeordnet der Zapfen-Stirnfläche eine Montageausformung aufweisen. Über die Montageausformung ist eine Festlegung der Laufrolle an dem mit der Laufrolle zu versehenen Gegenstand, bspw. einem Verfahrwagen oder dergleichen, ermöglicht.

So kann die Montageausformung bspw. als Plattenteil gebildet sein, insbesondere ein Plattenteil, das sich mit einer Breitseitenfläche ebenenparallel zu der Zapfen-Stirnfläche erstreckt. Das Plattenteil kann eine Öffnung, bevorzugt mehrere Öffnungen, aufweisen, so bspw. zur Ermöglichung einer Schraubbefestigung der Laufrolle an einem Gegenstand. Die diesbezüglichen Öffnungen können gemäß einer möglichen Ausgestaltung in einem zu der Hülsen-Außenfläche beabstandeten Bereich der Montageausformung gegeben sein.

Das Dämpfungsmaterial kann mit der Hülse und/oder dem Zapfen verklebt oder verschweißt sein. Auch kann bspw. im Zuge der Herstellung des Dämpfungsmaterials im Kunststoff-Spritzverfahren eine Verbindung mit der Hülse und/oder dem Zapfen durch Anspritzen erreicht sein.

Über das Dämpfungsmaterial kann, wie auch bevorzugt, eine im üblichen Betrieb nicht aufhebbare Verbindung zwischen Zapfen und Hülse gegeben sein, dies insbesondere bzgl. einer Belastung in Axial- bzw. Abzugrichtung, wie auch mit Bezug zu der Zapfenachse in Umfangsrichtung.

Das Dämpfungsmaterial kann aus einem oder mehreren Federteilen bestehen, alternativ aus einem Gummiwerkstoff, weiter alternativ aus einem Schaumstoff oder einem thermoplastischen Elastomer. So kann das dämpfende, elastische Material weiter so beschaffen sein, dass es stets das Bestreben hat, seine Ausgangsform wieder einzunehmen.

Der Einsatz unterschiedlicher Materialien ist möglich. Beispielsweise kann als Material Hartgummi dienen. Denkbar ist ebenfalls der Einsatz von bspw. wellenförmig gestalteten Federn. Auch kann das Dämpfungsmaterial auf Basis von Schaumstoff gebildet sein. Hierzu eignet sich bspw. ein Material auf Polyurethan-Basis. Ein solches Material ist bspw. unter dem Warenzeichen "Cellasto ^{®}" bekannt. Es wird diesseits auf die Veröffentlichung "Elastogran" der BASF-Gruppe verwiesen, nämlich "18011-2001". Erfindungsgemäß besteht ein vorteilhafter Werkstoff-Kennwert darin, dass das Dämpfungsmaterial eine Rohdichte von 350 kg/m³ bis 650 kg/m³ aufweist. Diese Eigenschaft wird bei Prüfung nach DIN 53420 ermittelt.

Das Dämpfungsmaterial kann unter Vorspannung zwischen dem Zapfen und der Hülse einliegen. Hierzu kann das Dämpfungsmaterial bspw. mit ca. 30% komprimiert sein.

Jedenfalls über einen Teil der axialen Höhe des Zapfens kann das Dämpfungsmaterial unter Belassung eines vom Dämpfungsmaterial freien axialen Bereichs ausgebildet sein. So kann sich weiter das Dämpfungsmaterial bspw. zugeordnet den axialen Endbereichen des Zapfens in Umfangsrichtung erstrecken. Diese Dämpfungsmaterialbereiche sind zueinander beabstandet, so dass sich ein allein durch die Außenfläche des Zapfens und durch die Innenfläche der Hülse begrenzter Ringraum ergeben kann. So kann sich entsprechend ein von dem Dämpfungsmaterial freier axialer Bereich in Umfangsrichtung durchgehend ausbilden.

In einer möglichen Weiterbildung, ist die Radachse mittels einer Achshülse in einer Achshöhlung einer Nabe des Rades aufgenommen, wobei zwischen der Achshülse und der Achshöhlung ein elastisches Material aufgenommen ist. Bezüglich des elastischen Materials wird auf die mögliche Materialwahl hinsichtlich des Dämpfungsmaterials hingewiesen.

Zufolge der vorgeschlagenen Anordnung ist auch hier eine sogenannte schwimmende Lagerung des Rades erreicht. So können Stöße bereits im Bereich der Radlagerung zumindest teilweise aufgefangen werden. Die Achshülse nimmt hierbei die Radachse in einer möglichen und bevorzugten Ausgestaltung unmittelbar auf. Die Achshöhlung in der Nabe des Rades hingegen ist zu der Achshülse bevorzugt sowohl in radialer Richtung als auch in axialer Richtung bzgl. der geometrischen Radachse stets so beabstandet, dass jegliche axiale und/oder radiale Berührung zwischen der Achshülse und der Achshöhlung gehindert ist.

So kann in einer Außenfläche der Achshülse über eine axiale Länge eine radiale Ausnehmung ausgebildet sein, in welcher das elastische Material aufgenommen ist. Das elastische Material kann so zufolge Einliegen in der Ausnehmung in Axialrichtung gesichert sein. Das elastische Material kann für sich genommen eine hülsenartige Gestalt aufweisen, hierbei ggf. an die axiale und/oder radiale Abmessung der ggf. vorgesehenen radialen Ausnehmung in der Außenfläche der Achshülse angepasst.

Hierbei kann das elastische Material in radialer Richtung über eine an die radiale Ausnehmung anschließende Außenfläche der Achshülse hinausragen. Diese anschließende Außenfläche ergibt sich in axialer Verlängerung zu der radialen Ausnehmung. Das in die Ausnehmung einliegende elastische Material kann sich hierbei um einen Betrag bevorzugt im Zehntelmillimeter-Bereich über diese Außenfläche hinaus erstrecken, bspw. über 2/10 mm oder 3/10 mm, bis hin zu bspw. 5/10 mm.

In axialer Ausrichtung kann die Länge des elastischen Materials angepasst sein an die axiale Länge der Achshöhlung, ggf. die axiale Länge der Achshöhlung aufweisend. So kann weiter gemäß einer bevorzugten Ausgestaltung eine vollflächige Abstützung der Achshülse über die nach innen weisende Hülsenfläche auf dem elastischen Material gegeben sein.

Die vorbeschriebenen Merkmale, insbesondere bzgl. der ermöglichten Dämpfung zwischen dem Zapfen und der Hülse beziehen sich in vollem Umfang auch auf das vorbeschriebene Aufsatz-Dämpfungsteil, mit der Maßgabe, dass der Zapfen durch die innere Hülse gebildet ist und die Hülse durch die äußere Hülse. Entsprechend erstreckt sich das Dämpfungsmaterial bei Ausbildung eines Aufsatz-Dämpfungsteils im Wesentlichen zwischen der inneren und der äußeren Hülse, wie dies bei der vorbeschriebenen Laufrolle zwischen dem Zapfen und der Hülse beschrieben ist.

Bei einer Ausbildung als Aufsatz-Dämpfungsteil, das bevorzugt dem Zapfen der Laufrolle zuordbar ist, können an der inneren Hülse Festsetzungsmittel vorgesehen sein, die eine Festsetzung des Aufsatz-Dämpfungsteils an der Laufrolle, insbesondere an dem Zapfen, ermöglichen. Die Festsetzungsmittel können allein eine Unverlierbarkeit des Aufsatz-Dämpfungsteils an der Laufrolle ergeben.

So können die Festsetzungsmittel in einer möglichen Ausgestaltung als Rastmittel ausgebildet sein, bspw. in Form einer federunterstützten Kugelrast oder weiter bspw. in Form einer Federzunge.

Alternativ können die Festlegungsmittel auch Schrauben sein, bspw. Gewindestifte, welche in der Hülse gehaltert stirnseitig zur Erreichung einer Klemmung gegen die Außenfläche des Zapfens wirken.

Die mit einem Innengewinde der inneren Hülse zusammenwirkende Schraube (Gewindestift) kann durch eine Öffnung in der äußeren Hülse betätigbar sein. Die äußere Öffnung in der äußeren Hülse ist, bevorzugt, in radialer Überdeckung zu der Schraube vorgesehen, weiter bevorzugt in einem Bereich, in welchem zwischen der inneren und der äußeren Hülse kein Dämpfungsmaterial vorgesehen ist. Gegebenenfalls kann aber auch das Dämpfungsmaterial zur Betätigung der Schraube eine entsprechend positionierte Durchgangsöffnung aufweisen.

Die innere Hülse kann eine erste Zentralöffnung aufweisen, insbesondere in der in üblicher Nutzungsstellung nach oben weisenden Hülsen-Stirnfläche, und die äußere Hülse eine zweite Zentralöffnung, wobei die erste und die zweite Zentralöffnung der inneren und äußeren Hülse in einer Projektion in Richtung der zentralen Achse des Zapfens bzw. der inneren Hülse koaxial zueinander und koaxial zu der Durchgangsöffnung des Dämpfungsmaterials angeordnet sein können. Es kann sich so insgesamt eine zentrale, koaxial zur Zapfenachse ausgerichtete Durchgangsöffnung im Stirnbereich des Aufsatz-Dämpfungsteils ergeben, wodurch der durch die innere Hülse begrenzte Innenraum mit der Umgebung außerhalb der äußeren Hülse verbunden ist.

Die erste und zweite Zentralöffnung können mit einem aus einem elastischen Werkstoff bestehenden Stopfenteil verbunden sein, das eine oder mehrere Durchlassöffnungen wie bspw. ein elektrisches Verbindungskabel aufweisen kann. Das Stopfenteil kann materialmäßig gleich gebildet sein oder vergleichbare Eigenschaften aufweisen, wie das elastische Material im Bereich der Radachse und/oder im Bereich zwischen der inneren und äußeren Hülse. So ist zwar über das Stopfenteil eine unmittelbare Verbindung von innerer und äußerer Hülse ggf. gegeben, dies aber über ein elastisches Material, so dass auch diese Verbindung stoßabsorbierend erreicht ist. Das ggf. durch das Stopfenteil geführte elektrische Verbindungskabel kann bspw. genutzt sein zur elektrischen Steuerung einer Laufrolle gemäß der eingangs erwähnten EP 2 720 882 B1.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine Laufrolle in perspektivischer Darstellung, betreffend eine erste Ausführungsform;
- Fig. 2: einen Längsschnitt durch einen Zapfenbereich der Laufrolle;
- Fig. 3: die Laufrolle in perspektivischer Darstellung mit einem aufgesetzten Aufsatz-Dämpfungsteil in einer Ausführungsform;
- Fig. 4: das Aufsatz-Dämpfungsteil der Ausführungsform gemäß Fig. 3 in Draufsicht;
- Fig. 5: den Schnitt gemäß der Linie V - V in Fig. 4;
- Fig. 6: das Aufsatz-Dämpfungsteil der Ausführungsform gemäß Fig. 3 in perspektivischer Schnittdarstellung;
- Fig. 7: eine der Fig. 5 entsprechende Darstellung, jedoch eine alternative Ausführungsform betreffend;
- Fig. 8: eine weitere der Fig. 5 entsprechende Darstellung, betreffend eine weitere Ausführungsform des Aufsatz-Dämpfungsteils;
- Fig. 9: eine der Fig. 3 entsprechende perspektivische Darstellung mit an der Laufrolle angesetztem Aufsatz-Dämpfungsteil in einer alternativen Ausführungsform;
- Fig. 10: das Aufsatz-Dämpfungsteil der Ausführungsform gemäß Fig. 9 in Draufsicht;
- Fig. 11: den Schnitt gemäß der Linie XI - XI in Fig. 10;
- Fig. 12: das Aufsatz-Dämpfungsteil der Ausführungsform gemäß Fig. 9 in perspektivischer Schnittdarstellung;
- Fig. 13: eine weitere der Fig. 3 entsprechende Darstellung einer Lenkrolle mit einem Aufsatz-Dämpfungsteil in einer weiteren Ausführungsform;
- Fig. 14: das Aufsatz-Dämpfungsteil der Ausführungsform gemäß Fig. 13 in Draufsicht;
- Fig. 15: den Schnitt gemäß der Linie XV - XV in Fig. 14;
- Fig. 16: das Aufsatz-Dämpfungsteil der Ausführungsform gemäß Fig. 13 in perspektivischer Schnittdarstellung;
- Fig. 17: in perspektivischer Schnittdarstellung den Bereich einer in einer Achshöhlung eines Rades aufgenommenen Achshülse für eine Radachse.

### Beschreibung der Ausführungsformen

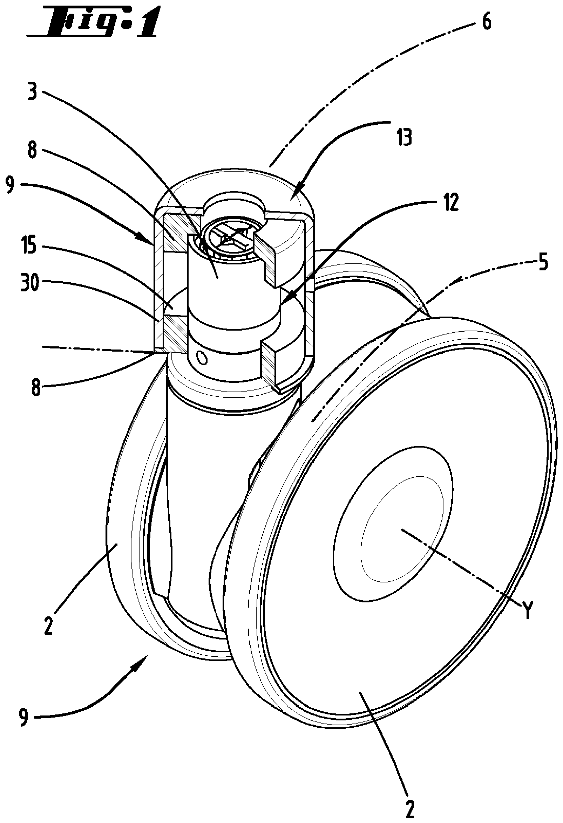

Dargestellt und beschrieben ist, zunächst mit Bezug zu Fig. 1, eine Laufrolle 1, die in dem dargestellten Ausführungsbeispiel als Doppelrolle ausgebildet ist. Die Laufrolle 1 weist im Falle einer Doppelrolle zwei Räder 2 auf und einen Zapfen 3. In dem Zapfen 3 kann ein Elektromotor angeordnet sein, dessen Stromanschluss durch ein nach oben, vorzugsweise zentral, aus dem Zapfen 3 herausgeführtes elektrisches Verbindungskabel 4 gegeben sein kann. Bezüglich der Wirkungsweise und der Anordnung des Elektromotors und der weiteren Stellmittel in der Laufrolle 1 wird auf die eingangs erwähnte EP 2 720 882 B1 verwiesen. Der Inhalt dieser Patentschrift wird hiermit vollinhaltlich in die Offenbarung vorliegender Erfindung mit einbezogen, auch zu dem Zweck, Merkmale dieser Patentschrift in Ansprüche vorliegender Erfindung mit einzubeziehen.

In üblicher Nutzungsstellung ist der Zapfen 3 mit einer zentralen Zapfenachse x vertikal ausgerichtet. Die Zapfenachse x ist im Falle der Ausbildung der Laufrolle 1 als Lenkrolle zugleich die Lenkachse.

Die geometrische Drehachse y der Räder 2 ist quer zur Zapfenachse x ausgerichtet, so im üblichen Nutzungsfall im Wesentlichen horizontal.

Der Zapfen 3 dient in den dargestellten Ausführungsbeispielen mittelbar zur Anordnung der Laufrolle 1 an einem Gegenstand 5, bspw. einem Verfahrgestell, so im Falle einer Steckanordnung aufweisend eine entsprechend ausgebildete Steckaufnahme 6 oder im Falle einer sonstigen Anordnung eine entsprechend ausgebildete Befestigungsfläche 7.

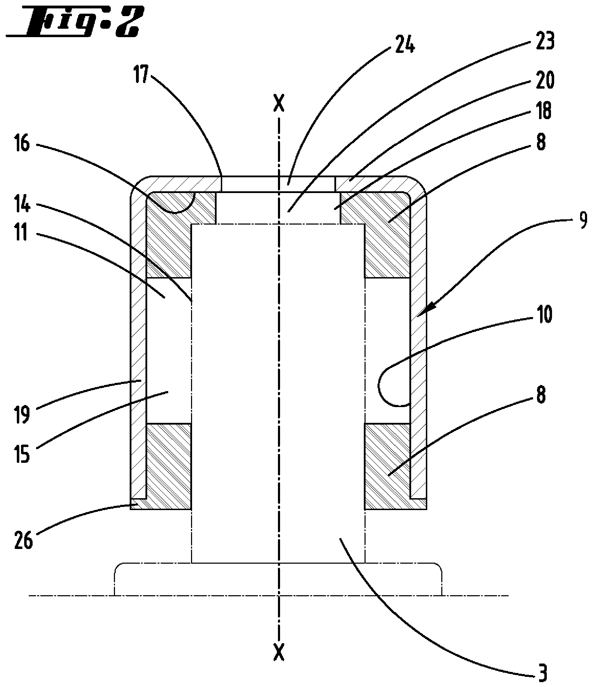

Insbesondere zur Dämpfung von Stößen ist im Wesentlichen zwischen der Steckaufnahme 6 bzw. der Befestigungsfläche 7 des Gegenstandes 5 und dem laufrollenseitigen Zapfen 3 - und somit der Laufrolle 1 im Wesentlichen insgesamt ein Dämpfungsmaterial 8 vorgesehen. Dieses ist zunächst und im Wesentlichen in einem Bereich zwischen der Außenseite des Zapfens 3 und einer den Zapfen 3 überfangenden äußeren Hülse 9 angeordnet und ausgebildet (vgl. Figuren 1 und 2).

Die äußere Hülse 9 bildet im Falle einer Steckanordnung der Laufrolle 1 an dem Gegenstand 5, bspw. gemäß der Darstellung in Fig. 1, den mit der Steckaufnahme 6 zusammenwirkenden Steckabschnitt.

Die äußere Hülse 9 ist mit Bezug auf die Zapfenachse x in Radialrichtung vergrößert gegenüber dem Außendurchmesser des Zapfens 3, darüber hinaus bevorzugt auch in Axialerstreckung länger gewählt als der Zapfen 3.

Es ergibt sich so umfangsmäßig zwischen der Außenfläche des Zapfens 3 und der nach radial innen weisenden Innenfläche 10 der äußeren Hülse 9 ein Ringraum 11, mit einem sich zwischen der Außenfläche des Zapfens 3 und der Innenfläche 10 der äußeren Hülse 9 ergebenden Radialmaß, welches dem 2-bis 4-Fachen der Materialdicke der äußeren Hülse 9 entsprechen kann, darüber hinaus etwa einem Sechstel bis einem Viertel, weiter bspw. etwa einem Drittel des quer zur Zapfenachse x betrachteten Zapfendurchmessers.

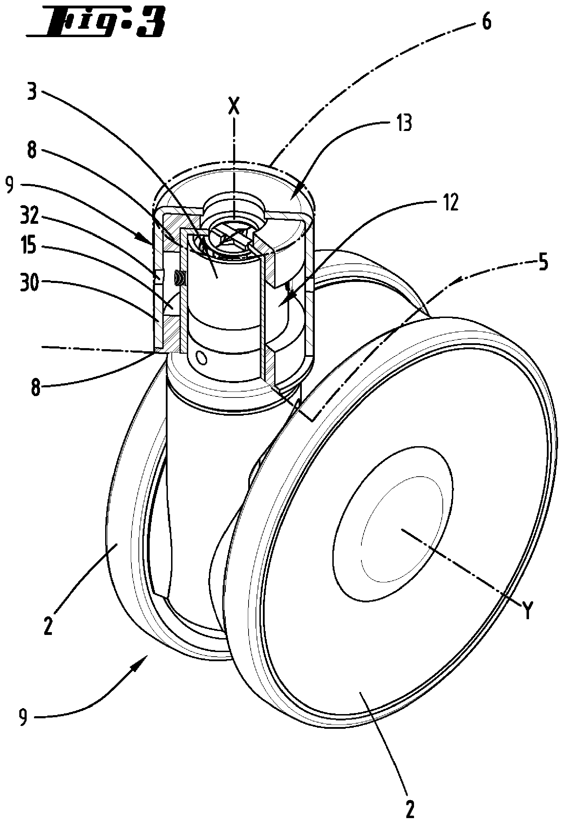

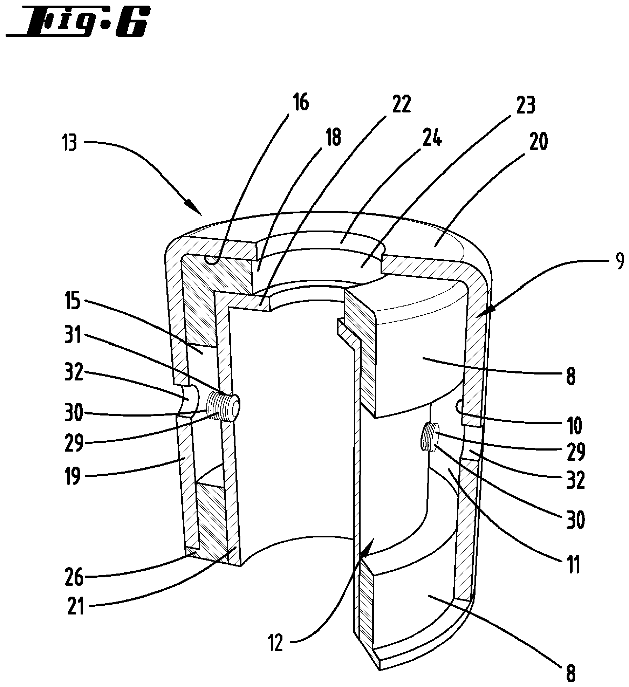

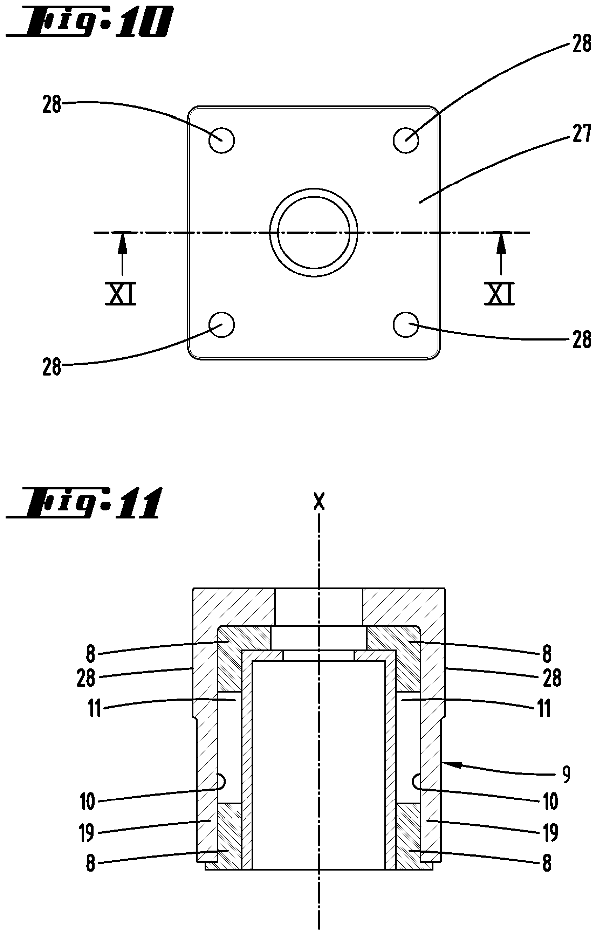

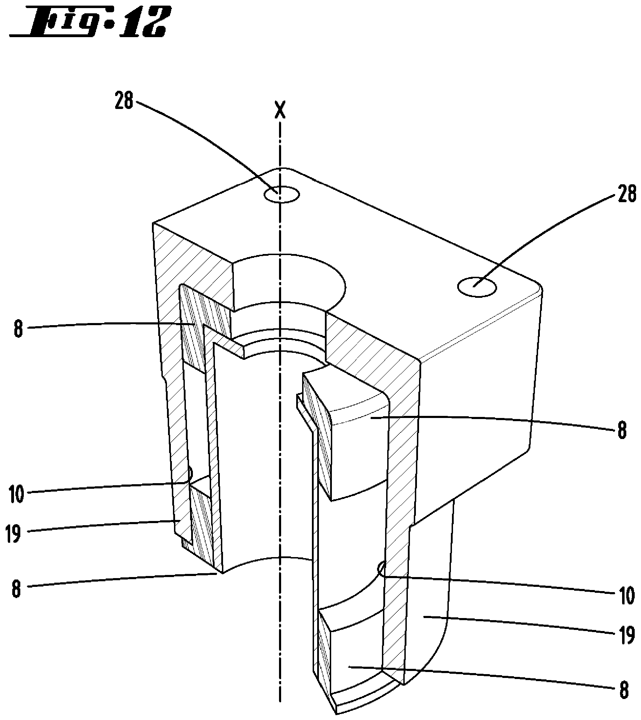

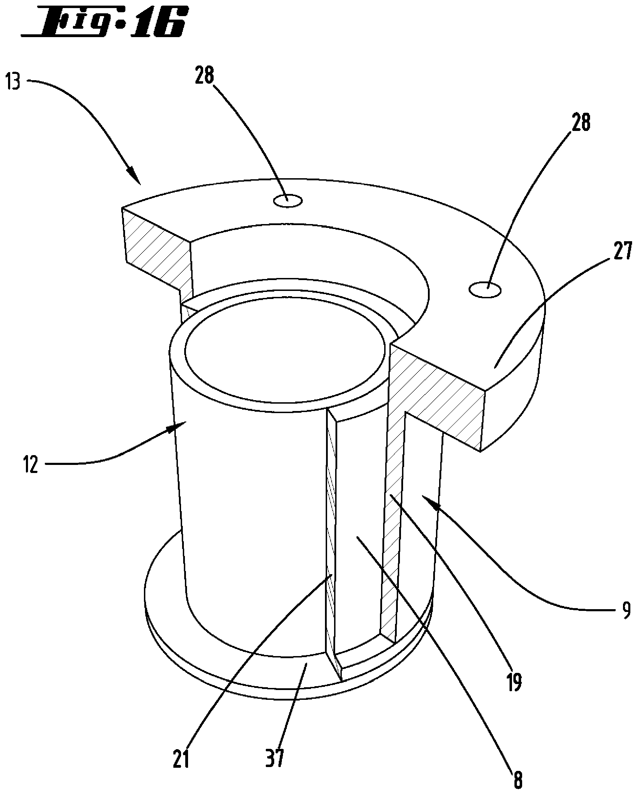

In den Zeichnungen der Figuren 3 bis 16 sind Ausführungsbeispiele dargestellt, bei welchen das Dämpfungsmaterial 8 nicht unmittelbar zwischen dem Zapfen 3 und der äußeren Hülse 9 angeordnet ist, sondern vielmehr zwischen der äußeren Hülse 9 und einer inneren Hülse 12. So ist hierdurch ein Aufsatz-Dämpfungsteil 13 geschaffen, das geeignet ist zum Aufsetzen auf den Zapfen 3, somit weiter geeignet ist zum Nachrüsten einer üblichen Laufrolle 1.

Der Innendurchmesser der inneren Hülse 12, wie bevorzugt auch die axiale Länge, ist im Falle der Ausbildung eines Aufsatz-Dämpfungsteils 13 weiter bevorzugt angepasst an den Durchmesser und die axiale Länge des Zapfens 3.

Auch bei Anordnung einer inneren Hülse 12 ergibt sich zwischen der Außenfläche der inneren Hülse 12 und der Innenfläche 10 der äußeren Hülse 9 ein Ringraum 11, in welchem das Dämpfungsmaterial 8 aufgenommen und angeordnet ist.

Durch das Dämpfungsmaterial 8 ist eine schwimmende Lagerung der in Kontaktstellung zu dem Gegenstand 5 verbringbaren äußeren Hülse 9 gegenüber der Laufrolle 1 erreicht. Stöße oder dergleichen werden in Betrieb der Laufrolle 1 absorbiert.

Das Dämpfungsmaterial 8 kann sich gemäß einer möglichen Ausgestaltung über den gesamten Umfang und die gesamte axiale Höhe des Ringraumes 11 erstrecken. Bevorzugt ist jedoch eine Ausgestaltung, bei welcher das Dämpfungsmaterial 8 jedenfalls über eine axiale Teilhöhe, die etwa der halben bis 2/3 der axialen Länge des Zapfens entsprechen kann, einen dämpfungsmaterialfreien Bereich 15 belässt. Dieser Bereich 15 kann, wie auch bevorzugt, umfangsmäßig durchgehend ausgebildet sein.

Durch die vorbeschriebene Maßnahme können zwei Dämpfungsmaterialabschnitte gegeben sein, nämlich, wie auch bevorzugt, ein axial in Nutzungsstellung unterer Dämpfungsbereich, zugeordnet dem nach unten weisenden umlaufenden Rand der äußeren Hülse 9, und ein axial oberer Dämpfungsbereich, bevorzugt in einem im Querschnitt betrachteten Übergang von dem Ringraum 11 in einen sich zwischen der nach unten weisenden Hülsen-Stirnfläche 16 und der nach oben weisenden Zapfen-Stirnfläche 17 bzw. der diese Zapfen-Stirnfläche 17 überfangenden Decke der inneren Hülse 12 ergebenden axialen Abstandraum 18.

Das Axialmaß des Abstandraumes 18 kann im Wesentlichen dem Radialmaß des Ringraumes 11 entsprechen.

Die äußere Hülse 9 weist eine Hülsenwandung 19 und eine Hülsendecke 20 auf. Die Hülsenwandung 19 erstreckt sich koaxial zur Zapfenachse x. Die Hülsendecke 20 verläuft in einer Querebene zur Zapfenachse x, weiter bevorzugt parallel zur Zapfen-Stirnfläche 17.

Im Falle der Ausbildung eines Aufsatz-Dämpfungsteils 13 ist die dann vorgesehene innere Hülse 12 ebenfalls mit einer umlaufenden Hülsenwandung 21 versehen, die unmittelbar die Außenfläche 14 des Zapfens 3 umfasst. Weiter kann die innere Hülse 12 sich über eine Hülsendecke 22 auf der Zapfen-Stirnfläche 17 abstützen.

Gemäß den in den Figuren 3 bis 12 gezeigten Ausführungsbeispielen kann sich insbesondere der vertikal obere Abschnitt des Dämpfungsmaterials 8 auch in den Bereich des axialen Abstandraumes 18 hineingreifend erstrecken. Entsprechend ergibt sich die Anordnung des Dämpfungsmaterials 8 auch in Überdeckung zu der Zapfen-Stirnfläche 17 bzw. der dieser zuordbaren Hülsendecke 22 und der Hülsen-Stirnfläche 16 der äußeren Hülse 9.

In Überdeckung zu der Zapfen-Stirnfläche 17 bzw. der Hülsendecke 22 der inneren Hülse 12 belässt das Dämpfungsmaterial 8 in dem in den axialen Abstandraum 18 eingreifenden Bereich eine in Richtung der zentralen Achse x des Zapfens 3 verlaufende Durchgangsöffnung 23.

Ober- und unterseitig dieser Durchgangsöffnung 23 in dem Dämpfungsmaterial 8 ist in der äußeren Hülse 9 in deren Hülsendecke 20 eine koaxial zur Zapfenachse x ausgebildete (zweite) Zentralöffnung 24 vorgesehen.

Im Falle der Anordnung und Ausbildung einer inneren Hülse 12 kann auch deren Hülsendecke 22 mit einer ersten Zentralöffnung 25 versehen sein.

Die beiden Zentral Öffnungen 24 und 25 können, wie auch dargestellt, gegenüber der Durchgangsöffnung 23 des Dämpfungsmaterials 8 durchmesserverringert sein.

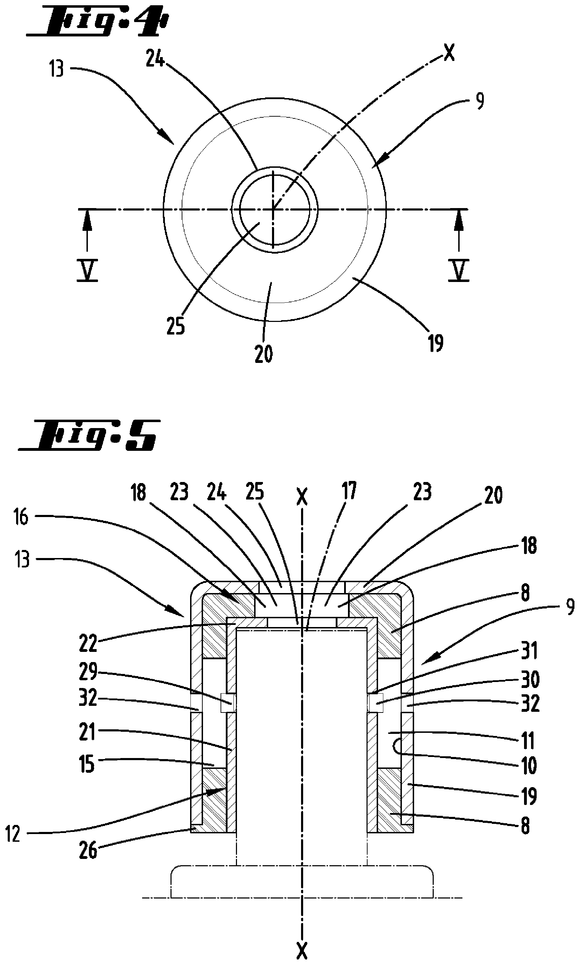

Auch kann der vertikal untere Abschnitt des Dämpfungsmaterials 8 entlang des nach unten weisenden Endbereichs einen nach radial außen gerichteten, umlaufenden Kragenabschnitt 26 aufweisen, auf welchem sich die zugewandte Stirnrandfläche der äußeren Hülse 9 abstützen kann (vgl. Figuren 5, 7, 8 oder 11).

Durch die vorbeschriebene Anordnung und Ausbildung des Dämpfungsmaterials 8 zwischen der inneren und äußeren Hülse oder zwischen dem Zapfen und der äußeren Hülse ist eine derartige Beabstandung des Zapfens, ggf. mit der hierauf unmittelbar angeordneten inneren Hülse 12, zu der äußeren Hülse 9 gegeben, dass jede axiale und auch radiale Berührung zwischen dem Zapfen bzw. der inneren Hülse 12 und der äußeren Hülse 9 gehindert ist. Eine unmittelbare Berührung von Zapfen 3 bzw. innerer Hülse 12 und äußerer Hülse 9 und hierüber mit dem Gegenstand 5 ist unterbunden.

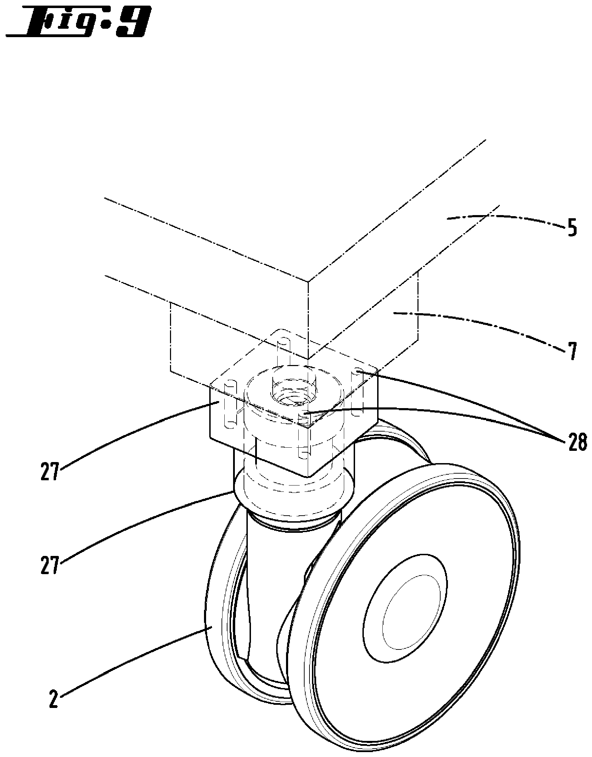

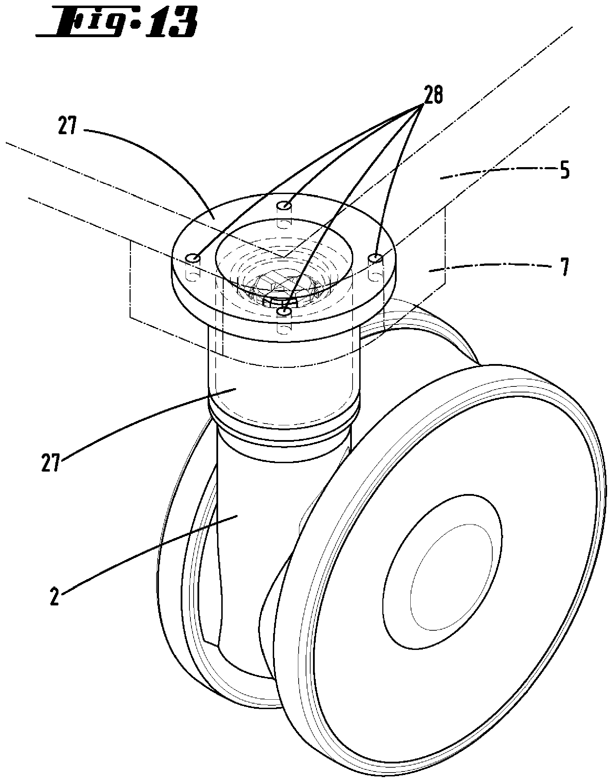

Anstelle einer wie in den Figuren 3 bis 8 dargestellten Steckhalterung der Laufrolle 1 an dem Gegenstand 5 kann auch eine beispielhafte Schraubbefestigung der Laufrolle 1 an einer Befestigungsfläche 7 des Gegenstandes 5 erfolgen. Hierzu kann das Aufsatz-Dämpfungsteil 13 bzw. die äußere Hülse 9 zugeordnet der Zapfen-Stirnfläche 17 eine sich ggf. radial nach außen über das äußere Durchmessermaß der äußeren Hülse 9 hinaus erstreckende Montageausformung 27 aufweisen. Diese kann gemäß der Ausführungsform in den Figuren 9 bis 12 im Grundriss rechteckig, insbesondere quadratisch ausgebildet sein, alternativ gemäß der Ausführungsform in den Figuren 13 bis 16 auch in Form eines Kreisscheibenteils.

Jedenfalls kann die Montageausformung 27 insgesamt als Plattenteil gebildet sein. Diese kann weiter mehrere Öffnungen 28 aufweisen, bspw. zur Schraubbefestigung der Laufrolle 1 an dem Gegenstand 5.

Das Dämpfungsmaterial 8, das in einer möglichen, auch bevorzugten Ausgestaltung ein Schaumstoff oder ein thermoplastisches Elastomer ist, kann bei Ausbildung eines Aufsatz-Dämpfungsteils 13 wandungsinnenseitig mit der äußeren Hülse 9 und wandungsaußenseitig mit der inneren Hülse 12, bei unmittelbarer Ausbildung an dem Zapfen 3 mit der Innenfläche der äußeren Hülse 9 und der Außenfläche des Zapfens 3, verklebt oder auch verschweißt sein.

Ist ein Aufsatz-Dämpfungsteil 13 mit einer inneren Hülse 12 vorgesehen, so kann das Aufsatz-Dämpfungsteil 13 ausgebildet sein zur Befestigung an dem Zapfen 3. Entsprechend kann die innere Hülse 12 Festsetzungsmittel 29 aufweisen, zur Zusammenwirkung mit dem Zapfen 3. So kann gemäß der Darstellung in Fig. 5 ein Festsetzungsmittel 29 als Schraube 30 ausgebildet sein, bspw. in Form eines Gewindestifts. Diese Schraube 30 sitzt in einem Innengewinde 31 im Bereich der Hülsenwandung 21 der inneren Hülse 12 ein. Die diesbezügliche Gewindebohrung ist durchgängig, so dass die Schraubenspitze geeignet ist zur Klemmbeaufschlagung gegen die Außenfläche 14 des Zapfens 3. Die Schraube 30 kann, wie auch bevorzugt, durch eine in radialer Verlängerung zu der Schraube 30 bzw. des Innengewindes 31 in der inneren Hülse 12 in der Hülsenwandung 19 der äußeren Hülse 9 ausgebildeten Öffnung 32 zur Betätigung mit einem Schraubwerkzeug freiliegen.

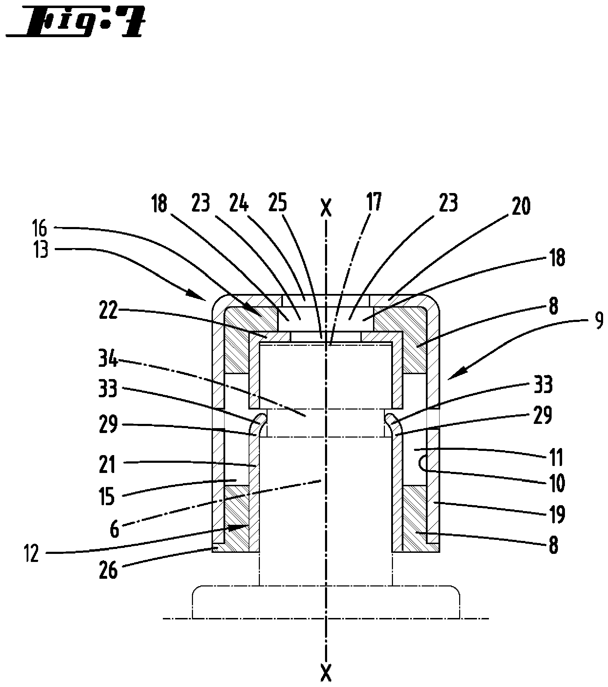

Auch kann, wie in Fig. 7 angedeutet, das Festsetzungsmittel 29 als Rastmittel 33 ausgebildet sein, so bspw. ausgebildet durch einen entsprechend angeordneten Freischnitt in der Hülsenwandung 21 der inneren Hülse 12, wonach sich ein nach radial innen vorragender Rastvorsprung einstellt, der federnd nach radial außen in Richtung auf den Ringraum 11 ausweichen kann, dies insbesondere im Zuge eines Aufsteckens des Aufsatz-Dämpfungsteils 13 auf den Zapfen 3. Der Zapfen 3 kann ein Gegen-Rastmittel 34 aufweisen, bspw. in Form einer mit Bezug zu der Zapfenachse x umlaufenden Ringnut, in die das Rastmittel 33 bevorzugt formschlüssig eingreifen kann.

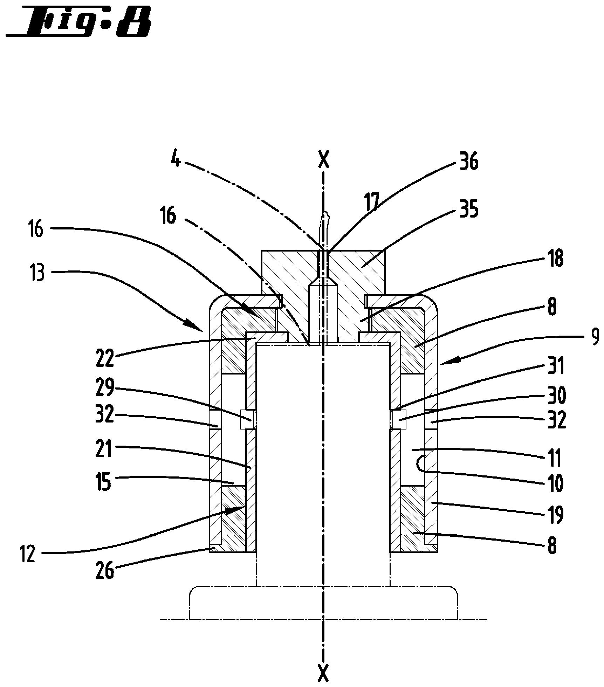

Auch kann gemäß der Darstellung in Fig. 8 ein Stopfenteil 35 mit einer in der Ausführungsform zentralen Durchlassöffnung 36 vorgesehen sein. Das Stopfenteil 35 ist im Bereich der Stirnflächen anordbar, hierbei im Wesentlichen die erste und zweite Zentralöffnung 25, 24 der Hülsendecken der inneren Hülse 12 und der äußeren Hülse 9 verbindend. Das Stopfenteil 35 ist bevorzugt ebenfalls aus einem Dämpfungsmaterial hergestellt, ggf., wie auch weiter bevorzugt, aus demselben oder vergleichbaren Material wie das Dämpfungsmaterial 8. Bevorzugt besteht das Stopfenteil 35 aus einem Gummi- oder gummiähnlichen Material. Entsprechend ist auch hierdurch die äußere Hülse 9 gegenüber der inneren Hülse 12 trotz der Stopfenverbindung entkoppelt.

Die Durchlassöffnung 36 kann, wie auch dargestellt, dazu dienen, ein Verbindungskabel 4, bspw. bei Ausbildung der Laufrolle 1 als elektrisch betätigbare Laufrolle, nach außen zu führen.

Die Figuren 13 bis 16 zeigen eine Ausführungsform eines Aufsatz-Dämpfungsteils 13, bei welcher die äußere Hülse 9 sich lediglich zusammensetzt aus der zu der Zapfenachse x umlaufenden Hülsenwandung 19 und einer im Nutzungszustand am oberen Ende sich nach radial außen erstreckenden Montageausformung 27.

Die innere Hülse 12 setzt sich ebenfalls allein nur aus der Hülsenwandung 21 und einem unteren, nach radial außen abragenden Kragen 37 zusammen. Eine Hülsendecke entfällt in dem dargestellten Ausführungsbeispiel sowohl bzgl. der inneren Hülse als auch der äußeren Hülse 9.

Das Dämpfungsmaterial 8 erstreckt sich in der dargestellten Ausführungsform mit Bezug zu der Zapfenachse x umlaufend zwischen der nach radial außen weisenden Fläche der inneren Hülse 12 und der Innenfläche 10 der äußeren Hülse 9, wobei sich über die gesamte axiale Höhe, in welcher eine radiale Überdeckung von Hülsenwandung 19 der äußeren Hülse 9 und Hülsenwandung 21 der inneren Hülse 12 gegeben ist, das Dämpfungsmaterial 8 nicht unterbrochen erstreckt.

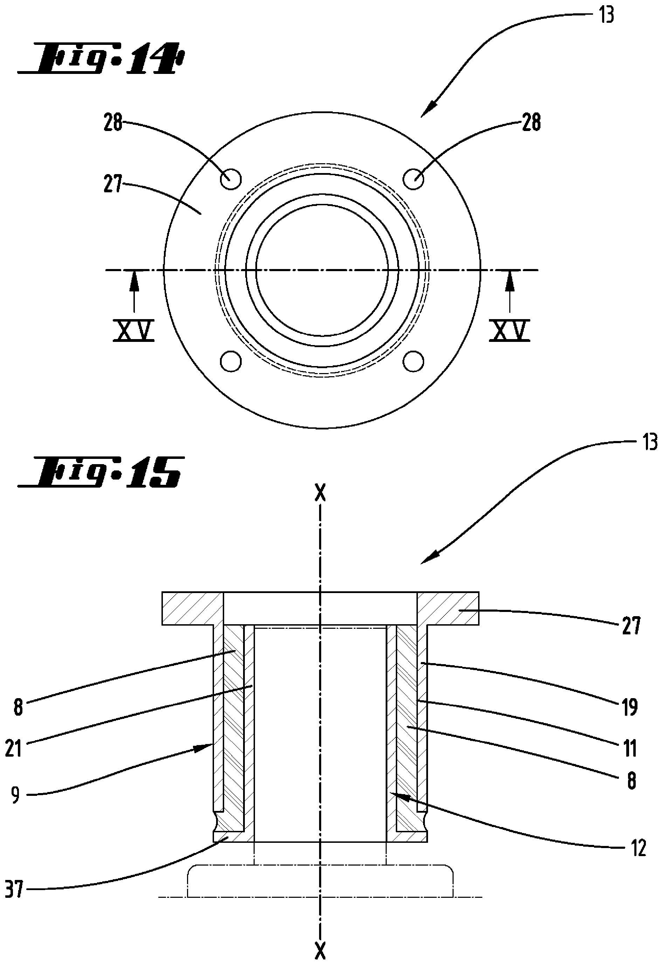

Darüber hinaus erstreckt sich das Dämpfungsmaterial 8 oberseitig des Kragens 37 nach außen, unterfängt hierbei die zugewandte Stirnwandfläche der äußeren Hülsenwandung 19 (vgl. Fig. 15).

Auch durch diese Anordnung ist sowohl in radialer Richtung als auch in axialer Richtung eine Berührung der inneren und äußeren Hülse bzw. einer Berührung des Zapfens und der äußeren Hülse unterbunden.

Eine weitere Verbesserung der Stoßabsorption kann durch eine entsprechende Abfederung der Räder 2 erreicht werden.

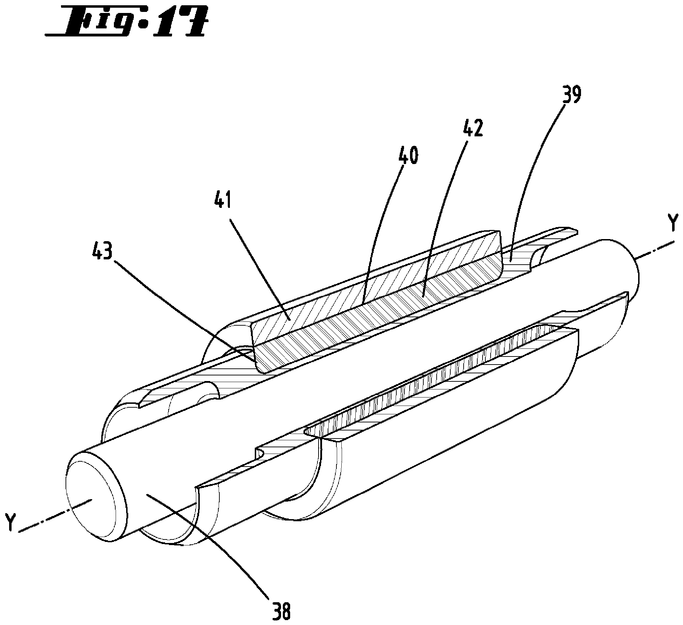

Gemäß der Darstellung in Fig. 17 ist hierzu die körperliche Radachse 38 in einer diese umgreifenden Achshülse 39 gefasst. Die Achshülse 39 bietet in einer möglichen Ausgestaltung unmittelbar die Lagerung für die Radachse 38.

Die Achshülse 39 ist mittelbar in einer Achshöhlung 40 einer Nabe 41 des Rades bzw. der Räder 2 aufgenommen.

Zwischen der Achshöhlung 40 und der Achshülse 39 ist insbesondere zur Stoßabsorption ein elastisches Material 42 aufgenommen. Dieses erstreckt sich in Radialrichtung betrachtet zwischen der nach radial innen weisenden Innenfläche der Achshöhlung 40 und einer nach radial außen weisenden Grundfläche der Achshülse 39 im Bereich einer Ausnehmung 43.

Die Ausnehmung 43 ist in Art einer mit Bezug zu der Drehachse y taillenartigen Einengung im Bereich der Hülsenwandung gebildet, hierbei sich über eine in Richtung der Achse y betrachtete Länge erstreckend, die im Wesentlichen der in selber Richtung betrachteten Länge der Nabe 41, insbesondere im Bereich deren Achshöhlung 40 entsprechen kann.

Die in radialer Richtung betrachtete Tiefe der Ausnehmung kann dem 0,5- bis 0,8-Fachen der in selber Richtung betrachteten Materialstärke der insgesamt rohrförmig gestalteten Achshülse 39 entsprechen.

Die Ausnehmung 43 kann, wie auch bevorzugt, vollständig, d.h. über die gesamte axiale Länge, wie auch über die gesamte radiale Tiefe ausgefüllt sein von dem elastischen Material 42. Bevorzugt erstreckt sich das elastische Material 42, das für sich betrachtet eine insgesamt hülsenartige Gestalt aufweist, in radialer Richtung über die sonstige Außenfläche der Achshülse 39 hinaus, insbesondere über ein Maß im Zehntel-Millimeter-Bereich, so bspw. über ein Maß von 2/10 mm oder 3/10 mm.

Das elastische Material 42 kann, wie auch bevorzugt, hinsichtlich des gewählten Materials gleich oder ähnlich gebildet sein wie das Dämpfungsmaterial 8.

So ergibt sich auch im Bereich der Radlagerung eine schwimmende, entkoppelte Anordnung, bei welcher sowohl in Erstreckungsrichtung der Achse y als auch quergerichtet hierzu eine Berührung von Achshülse 39 und Nabe 41 gehindert ist.

**Liste der Bezugszeichen**

| | | | |
|---|---|---|---|
| 1 | Laufrolle | 29 | Festsetzungsmittel |
| 2 | Räder | 30 | Schraube |
| 3 | Zapfen | 31 | Innengewinde |
| 4 | Verbindungskabel | 32 | Öffnung |
| 5 | Gegenstand | 33 | Rastmittel |
| 6 | Steckaufnahme | 34 | Gegen-Rastmittel |
| 7 | Befestigungsfläche | 35 | Stopfenteil |
| 8 | Dämpfungsmaterial | 36 | Durchlassöffnung |
| 9 | äußere Hülse | 37 | Kragen |
| 10 | Innenfläche | 38 | Radachse |
| 11 | Ringraum | 39 | Achshülse |
| 12 | innere Hülse | 40 | Achshöhlung |
| 13 | Aufsatz-Dämpfungsteil | 41 | Nabe |
| 14 | Außenfläche | 42 | elastisches Material |
| 15 | freier Bereich | 43 | Ausnehmung |
| 16 | Hülsen-Stirnfläche | | |
| 17 | Zapfen-Stirnfläche | | |
| 18 | Abstandsraum | | |
| 19 | Hülsenwandung | x | Zapfenachse |
| 20 | Hülsendecke | y | Drehachse |
| 21 | Hülsenwandung | | |
| 22 | Hülsendecke | | |
| 23 | Durchgangsöffnung | | |
| 24 | Zentralöffnung | | |
| 25 | Zentralöffnung | | |
| 26 | Kragenabschnitt | | |
| 27 | Montageausformung | | |
| 28 | Öffnung | | |

## Patentansprüche

1. Laufrolle (1) mit einem Rad (2) und einer Radachse (38), wobei ein bei üblicher Nutzungsstellung nach oben über ein Gehäuse der Laufrolle (1) überstehender Zapfen (3) vorgesehen ist, wobei auf dem Zapfen (3) eine radial durch ein zwischen der Hülse (9) und dem Zapfen (3) angeordnetes Dämpfungsmaterial (8) beabstandete Hülse (9) aufsitzt, wobei die Hülse (9) zu dem Zapfen (3) auch axial nach oben durch das zwischen der Hülse (9) und dem Zapfen (3) angeordnete Dämpfungsmaterial (8) beabstandet ist, wobei das Dämpfungsmaterial (8) derart angeordnet ist, dass jegliche axiale und/oder radiale Berührung zwischen dem Zapfen (3) und der Hülse (9) gehindert ist, dass der Zapfen (3) eine nach oben weisende Zapfen-Stirnfläche (17) aufweist, **dadurch gekennzeichnet, dass** das Dämpfungsmaterial (8) in Überdeckung zu der Zapfen-Stirnfläche (17) angeordnet ist, dass die Hülse (9) eine nach unten weisende Hülsen-Stirnfläche (16) aufweist, dass das Dämpfungsmaterial (8) in Überdeckung zu der Hülsen-Stirnfläche (16) angeordnet ist und dass das weiter in Überdeckung zu der Zapfen-Stirnfläche (17) ausgebildete Dämpfungsmaterial (8) eine in Richtung der zentralen Achse (x) des Zapfens (3) verlaufende Durchgangsöffnung (23) belässt.

2. Laufrolle nach Anspruch 1, **dadurch gekennzeichnet, dass** das Dämpfungsmaterial (8) zwischen zwei sich radial gegenüberliegenden Flächen, einer Außenfläche (14) des Zapfens (3) und einer Innenfläche (10) der Hülse (9), ausgebildet ist.

3. Laufrolle nach einem der vorhergehenden Ansprüche, **dadurch gekennzeichnet, dass** die Hülse (9) zugeordnet der Zapfen-Stirnfläche (17) eine Montageausformung (27) aufweist, wobei, bevorzugt, die Montageausformung (27) als Plattenteil gebildet ist, mit einer oder mehreren Öffnungen (28), bspw. zur Schraubbefestigung der Laufrolle (1) an einem Gegenstand (5).

4. Laufrolle nach einem der vorhergehenden Ansprüche, **dadurch gekennzeichnet, dass** das Dämpfungsmaterial (8) mit der Hülse (9) und/oder dem Zapfen (3) verklebt oder verschweißt ist und/oder dass das Dämpfungsmaterial (8) aus einem oder mehreren Federteilen, aus einem Gummiwerkstoff, einem Schaumstoff oder einem thermoplastischen Elastomer besteht.

5. Laufrolle nach einem der vorhergehenden Ansprüche, **dadurch gekennzeichnet, dass** das Dämpfungsmaterial (8) jedenfalls über eine axiale Höhe des Zapfens (3) unter Belassung eines von Dämpfungsmaterial freien axialen Bereiches (15) ausgebildet ist, wobei, bevorzugt, der von dem Dämpfungsmaterial freie axiale Bereich (15) umfangsmäßig durchgehend ausgebildet ist.

6. Laufrolle nach einem der vorhergehenden Ansprüche, **dadurch gekennzeichnet, dass** die Radachse (38) mit einer Achshülse (39) in einer Achshöhlung (40) einer Nabe (41) des Rades (2) aufgenommen ist, wobei zwischen der Achshülse (39) und der Achshöhlung (40) ein elastisches Material (42) aufgenommen ist, wobei, bevorzugt, in einer Außenfläche der Achshülse (39) über eine axiale Länge eine radiale Ausnehmung (43) ausgebildet ist, in welcher das elastische Material (42) aufgenommen ist und/ oder das elastische Material (42) für sich genommen eine hülsenartige Gestalt aufweist.

7. Laufrolle nach Anspruch 6, **dadurch gekennzeichnet, dass** das elastische Material (42) in radialer Richtung über eine an die radiale Ausnehmung (43) anschließende Außenfläche der Achshülse (39) hinausragt.

8. Laufrolle nach Anspruch 6 oder 7, **dadurch gekennzeichnet, dass** eine axiale Länge der Achshöhlung (40) an die axiale Länge des elastischen Materials (42) angepasst ist.

9. Laufrolle (1) mit einem Rad (2) und einer Radachse (38), wobei ein bei üblicher Nutzungsstellung nach oben über ein Gehäuse der Laufrolle (1) überstehender Zapfen (3) vorgesehen ist, wobei auf dem Zapfen (3) eine Hülse (9) aufsitzt und die Hülse (9) zu dem Zapfen (3) radial und axial nach oben durch ein zwischen der Hülse (9) und dem Zapfen (3) angeordnetes Dämpfungsmaterial (8) beabstandet ist, wobei das Dämpfungsmaterial (8) derart angeordnet ist, dass jegliche axiale und/oder radiale Berührung zwischen dem Zapfen (3) und der Hülse (9) gehindert ist, **dadurch gekennzeichnet, dass** das Dämpfungsmaterial (8) jedenfalls über eine axiale Teilhöhe einen dämpfungsmaterialfreien Bereich (15) belässt, so dass zwei Dämpfungsmaterialabschnitte gegeben sind, ein in einer Nutzungsstellung der Rolle axial unterer Dämpfungsbereich, zugeordnet einem nach unten weisenden umlaufenden Rand der Hülse (9) und ein axial oberer Dämpfungsbereich.

10. Laufrolle (1) mit einem Rad (2) und einer Radachse (38), wobei ein bei üblicher Nutzungsstellung nach oben über ein Gehäuse der Laufrolle (1) überstehender Zapfen (3) vorgesehen ist, wobei auf dem Zapfen (3) eine Hülse (9) aufsitzt und die Hülse (9) zu dem Zapfen (3) radial und axial nach oben durch ein zwischen der Hülse (9) und dem Zapfen (3) angeordnetes Dämpfungsmaterial (8) beabstandet ist, wobei das Dämpfungsmaterial (8) derart angeordnet ist, dass jegliche axiale und/oder radiale Berührung zwischen dem Zapfen (3) und der Hülse (9) gehindert ist, **dadurch gekennzeichnet, dass** die Radachse (38) mit einer Achshülse (39) in einer Achshöhlung (40) einer Nabe (41) des Rades (2) aufgenommen ist, wobei zwischen der Achshülse (39) und der Achshöhlung (40) ein elastisches Material (42) aufgenommen ist, und dass in einer Außenfläche der Achshülse (39) über eine axiale Länge eine radiale Ausnehmung (43) ausgebildet ist, in welcher das elastische Material (42) aufgenommen ist.

11. Laufrolle nach Anspruch 10, **dadurch gekennzeichnet, dass** das elastische Material (42) für sich genommen eine hülsenartige Gestalt aufweist.

12. Laufrolle nach einem der Ansprüche 10 oder 11, **dadurch gekennzeichnet, dass** das elastische Material (42) in radialer Richtung über eine an die radiale Ausnehmung (43) anschließende Außenfläche der Achshülse (39) hinausragt und/ oder dass eine axiale Länge der Achshöhlung (40) an die axiale Länge des elastischen Materials (42) angepasst ist.

13. Aufsatz-Dämpfungsteil (13) für eine Laufrolle (1) nach einem der Ansprüche 1 bis 12, wobei das Aufsatz-Dämpfungsteil (13) an dem Zapfen (3) der Laufrolle (1) in Übergriff zu dem Zapfen (3) anordbar ist, mit einer inneren Hülse (12) und einer äußeren Hülse (9), wobei die innere Hülse (12) einen Innendurchmesser und eine axiale Länge aufweist, wobei die innere Hülse (12) radial, bezogen auf eine übliche Nutzungsstellung der mit dem Aufsatz-Dämpfungsteil (13) versehenen Laufrolle (1), durch ein zwischen der inneren Hülse (12) und der äußeren Hülse (9) angeordnetes Dämpfungsmaterial (8) beabstandet ist, wobei die innere Hülse auch axial nach oben durch das Dämpfungsmaterial (8) beabstandet ist, wobei das Dämpfungsmaterial (8) derart angeordnet ist, dass jegliche axiale und/oder radiale Berührung zwischen der inneren Hülse (12) und der äußeren Hülse (9) gehindert ist, wobei an der inneren Hülse (12) Festsetzungsmittel (29) vorgesehen sind, die eine Festsetzung des Aufsatz-Dämpfungsteils (13) an der Laufrolle (1) ermöglichen, wobei die Festlegungsmittel (29) als Schraube (30) ausgebildet sind und wobei die mit einem Innengewinde (31) der inneren Hülse (12) zusammenwirkende Schraube (30) durch eine Öffnung (32) in der äußeren Hülse (9) betätigbar ist.

14. Aufsatz-Dämpfungsteil nach Anspruch 13, **dadurch gekennzeichnet, dass** die innere Hülse (12) eine erste Zentralöffnung (25) aufweist und die äußere Hülse (9) eine zweite Zentralöffnung (24), wobei die erste und die zweite Zentralöffnung (25, 24) in einer Projektion in Richtung der zentralen Achse (x) des Zapfens (3) koaxial zueinander und koaxial zu der Durchgangsöffnung (23) des Dämpfungselements (8) angeordnet sind, wobei, bevorzugt, die erste und zweite Zentralöffnung (25, 24) mit einem aus einem elastischen Werkstoff bestehenden Stopfenteil (35) verbunden sind, das eine oder mehrere Durchlassöffnungen (36) für bspw. ein elektrisches Verbindungskabel (4) aufweist.

15. Aufsatz-Dämpfungsteil nach Anspruch 13 oder 14, mit der Maßgabe, dass der Zapfen (3) durch die innere Hülse (12) gebildet ist und die Hülse durch die äußere Hülse (9).

## Claims

1. A castor (1) with a wheel (2) and a wheel axle (38), wherein a journal (3) projecting upwards beyond a housing of the castor (1) in the normal position of use is provided, wherein a sleeve (9) spaced radially by a damping material (8) arranged between the sleeve (9) and the journal (3) is seated on the journal (3), wherein the sleeve (9) is also spaced axially upwards from the journal (3) by the damping material (8) arranged between the sleeve (9) and the journal (3), the damping material (8) being arranged in such a way that any axial and/or radial contact between the journal (3) and the sleeve (9) is prevented, in that the journal (3) has an upwardly facing journal end face (17), **characterized in that** the damping material (8) is arranged in overlapping relationship with the journal end face (17), **in that** the sleeve (9) has a downwardly facing sleeve end face (16), **in that** the damping material (8) is arranged in overlapping relationship with the sleeve end face (16), and **in that** the damping material (8), which is further formed in overlapping relationship with the journal end face (17), leaves a through-opening (23) running in the direction of the central axis (x) of the journal (3).

2. A castor according to claim 1, **characterised in that** the damping material (8) is formed between two radially opposing surfaces, an outer surface (14) of the journal (3) and an inner surface (10) of the sleeve (9).

3. A castor according to one of the preceding claims, **characterised in that** the sleeve (9) has a mounting formation (27) associated with the journal end face (17), wherein, preferably, the mounting formation (27) is formed as a plate part, with one or more openings (28), for example for screw fastening of the castor (1) to an object (5).

4. A castor according to one of the preceding claims, **characterised in that** the damping material (8) is glued or welded to the sleeve (9) and/or the journal (3) and/ or that the damping material (8) consists of one or more spring parts, a rubber material, a foam material or a thermoplastic elastomer.

5. A castor according to one of the preceding claims, **characterised in that** the damping material (8) is formed at least over an axial height of the journal (3), leaving an axial region (15) free of damping material, wherein, preferably, the axial region (15) free of the damping material is formed to be circumferentially continuous.

6. A castor according to one of the preceding claims, **characterised in that** the wheel axle (38) is received with an axle sleeve (39) in an axle cavity (40) of a hub (41) of the wheel (2), wherein an elastic material (42) is received between the axle sleeve (39) and the axle cavity (40), wherein, preferably, a radial recess (43) is formed in an outer surface of the axle sleeve (39) over an axial length, in which recess the elastic material (42) is received and/or the elastic material (42) has a sleeve-like shape per se.

7. A castor according to claim 6, **characterised in that** the elastic material (42) projects in the radial direction beyond an outer surface of the axle sleeve (39) adjoining the radial recess (43).

8. A castor according to claim 6 or 7, **characterised in that** an axial length of the axle cavity (40) is matched to the axial length of the resilient material (42).

9. A castor (1) with a wheel (2) and a wheel axle (38), wherein a journal (3) projecting upwards beyond a housing of the castor (1) in the normal position of use is provided, wherein a sleeve (9) is seated on the journal (3) and the sleeve (9) is spaced radially and axially upwards from the journal (3) by a damping material (8) arranged between the sleeve (9) and the journal (3), wherein the damping material (8) is arranged in such a way that any axial and/or radial contact between the journal (3) and the sleeve (9) is prevented, **characterised in that** the damping material (8) leaves a damping material-free region (15) at least over an axial partial height, so that two damping material sections are provided, an axially lower damping region in a position of use of the roller, associated with a downwardly pointing circumferential edge of the sleeve (9) and an axially upper damping region.

10. A castor (1) with a wheel (2) and a wheel axle (38), wherein a journal (3) projecting upwards beyond a housing of the castor (1) in the usual position of use is provided, wherein a sleeve (9) is seated on the journal (3) and the sleeve (9) is spaced radially and axially upwards from the journal (3) by a damping material (8) arranged between the sleeve (9) and the journal (3), wherein the damping material (8) is arranged in such a way that any axial and/ or radial contact between the journal (3) and the sleeve (9) is prevented, **characterised in that** the wheel axle (38) is received with an axle sleeve (39) in an axle cavity (40) of a hub (41) of the wheel (2), wherein an elastic material (42) is received between the axle sleeve (39) and the axle cavity (40), and **in that** a radial recess (43) is formed in an outer surface of the axle sleeve (39) over an axial length, in which recess the elastic material (42) is received.

11. A castor according to claim 10, **characterised in that** the elastic material (42) has a sleeve-like shape in itself.

12. A castor according to one of claims 10 or 11, **characterised in that** the elastic material (42) projects in the radial direction beyond an outer surface of the axle sleeve (39) adjoining the radial recess (43) and/or that an axial length of the axle cavity (40) is adapted to the axial length of the elastic material (42).

13. Attachment damping part (13) for a castor (1) according to one of claims 1 to 12, wherein the attachment damping part (13) can be arranged on the journal (3) of the castor (1) in overlap with the journal (3), with an inner sleeve (12) and an outer sleeve (9), wherein the inner sleeve (12) has an inner diameter and an axial length, wherein the inner sleeve (12) is radially spaced, with respect to a usual position of use of the castor (1) provided with the attachment damping part (13), by a damping material (8) arranged between the inner sleeve (12) and the outer sleeve (9), the inner sleeve being also spaced axially upwards by the damping material (8), the damping material (8) being arranged in such a way that any axial and/or radial contact between the inner sleeve (12) and the outer sleeve (9) is prevented, wherein locking means (29) are provided on the inner sleeve (12), which allow the attachment damping part (13) to be fixed to the castor (1), the fixing means (29) being designed as a screw (30), and it being possible for the screw (30), which interacts with an internal thread (31) of the inner sleeve (12), to be actuated through an opening (32) in the outer sleeve (9).

14. An attachment damping part according to claim 13, **characterised in that** the inner sleeve (12) has a first central opening (25) and the outer sleeve (9) has a second central opening (24), the first and second central openings (25, 24) are arranged in a projection in the direction of the central axis (x) of the journal (3) coaxially with one another and coaxially with the through-opening (23) of the damping material (8), wherein, preferably, the first and second central openings (25, 24) are connected to a plug part (35) consisting of an elastic material, which has one or more through-openings (36) for, for example, an electrical connecting cable (4) an electrical connection cable (4).

15. An attachment damping part according to claim 13 or 14, with the proviso that the journal (3) is formed by the inner sleeve (12) and the sleeve is formed by the outer sleeve (9).

## Revendications

1. Galet de roulement (1) avec une roue (2) et un axe de roue (38), un tourillon (3) dépassant vers le haut d'un boîtier du galet de roulement (1) étant prévu dans la position d'utilisation habituelle, une douille (9) espacée radialement par un matériau d'amortissement (8) disposé entre la douille (9) et le tourillon (3) reposant sur le tourillon (3), le manchon (9) étant également espacé axialement vers le haut par rapport au tourillon (3) par le matériau d'amortissement (8) disposé entre le manchon (9) et le tourillon (3), le matériau d'amortissement (8) étant disposé de telle sorte que tout contact axial et/ou radial entre le tourillon (3) et le manchon (9) est empêché, le tourillon (3) présente une surface frontale de tourillon (17) orientée vers le haut, **caractérisé en ce que** le matériau d'amortissement (8) est disposé en recouvrement de la surface frontale de tourillon (17), **en ce que** le manchon (9) présente une surface frontale de manchon (16) orientée vers le bas , **en ce que** le matériau d'amortissement (8) est disposé en recouvrement par rapport à la surface frontale (16) de la douille et **en ce que** le matériau d'amortissement (8) réalisé en outre en recouvrement par rapport à la surface frontale (17) du tourillon laisse une ouverture de passage (23) s'étendant en direction de l'axe central (x) du tourillon (3).

2. Galet selon la revendication 1, **caractérisé en ce que** le matériau d'amortissement (8) est formé entre deux surfaces radialement opposées, une surface extérieure (14) du tourillon (3) et une surface intérieure (10) du manchon (9).

3. Galet de roulement selon l'une des revendications précédentes, **caractérisé en ce que** le manchon (9) présente une forme de montage (27) associée à la face frontale du tourillon (17), la forme de montage (27) étant de préférence formée comme une partie de plaque, avec une ou plusieurs ouvertures (28), par exemple pour la fixation par vis du galet de roulement (1) sur un objet (5).

4. Galet selon l'une des revendications précédentes, **caractérisé en ce que** le matériau d'amortissement (8) est collé ou soudé à la douille (9) et/ou au tourillon (3) et/ou **en ce que** le matériau d'amortissement (8) est constitué d'une ou plusieurs pièces élastiques, d'un matériau en caoutchouc, d'une mousse ou d'un élastomère thermoplastique.

5. Galet selon l'une quelconque des revendications précédentes, **caractérisé en ce que** le matériau d'amortissement (8) est formé en tout cas sur une hauteur axiale de l'axe (3) en laissant une zone axiale (15) exempte de matériau d'amortissement, de préférence la zone axiale (15) exempte de matériau d'amortissement étant formée de manière continue sur la circonférence.

6. Galet selon l'une des revendications précédentes, **caractérisé en ce que** l'axe de roue (38) est reçu avec une douille d'axe (39) dans une cavité d'axe (40) d'un moyeu (41) de la roue (2), un matériau élastique (42) étant reçu entre la douille d'axe (39) et la cavité d'axe (40), dans lequel, de préférence, un évidement radial (43) est formé dans une surface extérieure de la douille d'essieu (39) sur une longueur axiale, évidement dans lequel le matériau élastique (42) est reçu et/ou le matériau élastique (42) présente en soi une forme de douille.

7. Galet de roulement selon la revendication 6, **caractérisé en ce que** le matériau élastique (42) dépasse en direction radiale d'une surface extérieure de la douille d'axe (39) se raccordant à l'évidement radial (43).

8. Galet selon la revendication 6 ou 7, **caractérisé en ce qu'**une longueur axiale de la cavité d'axe (40) est adaptée à la longueur axiale du matériau élastique (42).

9. Galet de roulement (1) avec une roue (2) et un axe de roue (38), un tourillon (3) dépassant vers le haut d'un boîtier du galet de roulement (1) étant prévu dans la position d'utilisation habituelle, une douille (9) reposant sur le tourillon (3) et la douille (9) étant espacée radialement et axialement vers le haut du tourillon (3) par un matériau d'amortissement (8) disposé entre la douille (9) et le tourillon (3), le matériau d'amortissement (8) étant disposé de telle sorte, que tout contact axial et/ ou radial entre le tourillon (3) et le manchon (9) est empêché, **caractérisé en ce que** le matériau d'amortissement (8) laisse en tout cas sur une hauteur partielle axiale une zone (15) sans matériau d'amortissement, de sorte qu'il y a deux sections de matériau d'amortissement, une zone d'amortissement axialement inférieure dans une position d'utilisation du rouleau, associée à un em bord périphérique du manchon (9) orienté vers le bas et une zone d'amortissement axialement supérieure.

10. Galet de roulement (1) avec une roue (2) et un axe de roue (38), un tourillon (3) dépassant vers le haut d'un boîtier du galet de roulement (1) étant prévu dans la position d'utilisation habituelle, une douille (9) reposant sur le tourillon (3) et la douille (9) étant espacée radialement et axialement vers le haut du tourillon (3) par un matériau d'amortissement (8) disposé entre la douille (9) et le tourillon (3), le matériau d'amortissement (8) étant disposé de telle sorte, que tout contact axial et/ou radial entre le tourillon (3) et la douille (9) est empêché, **caractérisé en ce que** l'axe de roue (38) est reçu avec une douille d'axe (39) dans une cavité d'axe (40) d'un moyeu (41) de la roue (2), un matériau élastique (42) étant logé entre le manchon d'axe (39) et la cavité d'axe (40), et **en ce que** dans une surface extérieure du manchon d'axe (39) est formé, sur une longueur axiale, un évidement radial (43) dans lequel est logé le matériau élastique (42).

11. Galet de roulement selon la revendication 10, **caractérisé en ce que** le matériau élastique (42) présente en soi une forme de manchon.

12. Galet selon l'une des revendications 10 ou 11, **caractérisé en ce que** le matériau élastique (42) dépasse en direction radiale d'une surface extérieure de la douille d'axe (39) se raccordant à l'évidement radial (43) et/ou **en ce qu'**une longueur axiale de la cavité d'axe (40) est adaptée à la longueur axiale du matériau élastique (42).

13. Pièce d'amortissement rapportée (13) pour galet de roulement (1) selon l'une quelconque des revendications 1 à 12, dans laquelle la pièce d'amortissement rapportée (13) peut être disposée sur le tourillon (3) du galet de roulement (1) en étant en prise avec le tourillon (3), comprenant un manchon interne (12) et un manchon externe (9), le manchon interne (12) ayant un diamètre interne et une longueur axiale, le manchon intérieur (12) étant espacé radialement, par rapport à une position d'utilisation habituelle du galet de roulement (1) pourvu de l'élément d'amortissement rapporté (13), par un matériau d'amortissement (8) disposé entre le manchon intérieur (12) et le manchon extérieur (9), le manchon intérieur étant également espacé axialement vers le haut par le matériau d'amortissement (8), le matériau d'amortissement (8) étant disposé de telle sorte que tout contact axial et/ ou radial entre le manchon intérieur (12) et le manchon extérieur (9) est empêché, des moyens de fixation (29) étant prévus sur le manchon intérieur (12), qui permettent une fixation de la pièce d'amortissement rapportée (13) sur le galet de roulement (1), les moyens de fixation (29) étant réalisés sous forme de vis (30) et la vis (30) coopérant avec un filetage intérieur (31) de la douille intérieure (12) pouvant être actionnée à travers une ouverture (32) dans la douille extérieure (9).

14. Pièce d'amortissement rapportée selon la revendication 13, **caractérisé en ce que** le manchon intérieure (12) présente une première ouverture centrale (25) et le manchon extérieure (9) présente une deuxième ouverture centrale (24), les première et deuxième ouvertures centrales (25, 24) sont disposés coaxialement l'un par rapport à l'autre dans une projection dans la direction de l'axe central (x) du pivot (3) et coaxialement par rapport à l'ouverture de passage (23) de l'élément d'amortissement (8), dans lequel, de préférence, la première et la deuxième ouverture centrale (25, 24) sont reliées à une partie de bouchon (35) constituée d'un matériau élastique, qui présente une ou plusieurs ouvertures de passage (36) pour, par exemple, des câbles électriques un câble de connexion électrique (4).

15. Pièce d'amortissement rapportée selon la revendication 13 ou 14, à condition que le tourillon (3) soit formé par la douille intérieure (12) et que la douille soit formée par la douille extérieure (9).
